# FASCICULE DE BREVET EUROPEEN

(11) **EP 3 208 155 B1**
(45) Date de publication et mention de la délivrance du brevet: **20.02.2019**
(21) Numéro de dépôt: 16203928.3
(22) Date de dépôt: 14.12.2016
(51) Int. Cl.: B60R 13/10

(54) **PROCEDE POUR LA REALISATION D'UNE PLAQUE SIGNALETIQUE OU D'IMMATRICULATION ET PLAQUE AINSI OBTENUE**
VERFAHREN ZUR HERSTELLUNG EINES TYPEN- ODER NUMMERNSCHILDS, UND SO ERHALTENES SCHILD
METHOD FOR FORMING A NAMEPLATE OR REGISTRATION PLATE AND PLATE THUS OBTAINED

(30) Priorité: 22.02.2016 FR 1651412
(43) Date de publication de la demande: 23.08.2017
(73) Titulaire: Richard, Norbert, 74120 Megeve (FR); Richard, Norman, 01000 Bourg en Bresse (FR)
(72) Inventeur: Richard, Norbert, 74120 Megeve (FR); Richard, Norman, 01000 Bourg en Bresse (FR)
(74) Mandataire: Cabinet Laurent & Charras

(56) Documents cités:
- EP-A1- 1 550 991
- FR-A1- 2 989 943
- US-A1- 2005 078 487

## Description

### DOMAINE DE L'INVENTION

L'invention concerne le domaine des plaques signalétiques, d'identification, ou d'immatriculation.

Elle vise plus particulièrement les plaques dites de nouvelle génération, c'est-à-dire les plaques constituées d'un support rigide, réalisé en matière plastique, notamment transparente, recevant un film ou bande souple portant des informations de nature signalétique ou d'immatriculation d'un véhicule automobile.

### ART ANTERIEUR

Les plaques d'immatriculation, et autres plaques signalétiques dites de nouvelle génération, et réalisées en matière plastique ont permis de simplifier de manière importante leur procédé de réalisation, dans la mesure où il n'y a plus lieu de mettre en oeuvre le principe de l'emboutissage poinçon / matrice, pour la réalisation des différents caractères, notamment alphanumériques, d'identification ou d'immatriculation.

En effet, avec les nouvelles plaques d'immatriculation en matière plastique, on imprime lesdites informations, typiquement au moyen d'une imprimante thermique ou laser, sur un film à propriétés réflectrices ou rétro-réfléchissantes, de sorte qu'un gain de temps significatif peut être obtenu. Ce film est alors solidarisé par collage à la face interne d'une plaque rigide externe. De telles plaques ont par exemple été décrites dans le document FR 2 989 943. Le document US 2005/0078487 A1 divulgue un procédé pour la réalisation d'une plaque signalétique selon le préambule de la revendication 1.

Si incontestablement, la mise en oeuvre de cette nouvelle technologie permet un gain important en termes de temps, en revanche on se heurte à une difficulté, dès lors que l'on souhaite associer à ces plaques de la couleur, ou rajouter des logos ou informations additionnelles. En effet, il peut être envisagé d'associer des bordures ou des fonds colorés de nature différente, nécessitant un stock important de films plastiques, engendrant non seulement de l'encombrement, mais également une gestion de stocks en termes financiers importante.

Par ailleurs, certains constructeurs automobiles déclinent certaines de leurs gammes en leur associant des plaques d'immatriculation spécifiques, intégrant typiquement un fond tramé. De fait, cela impose aux officines réalisation les plaques d'immatriculation de disposer de stocks encore plus importants.

### EXPOSE DE L'INVENTION

L'objectif de l'invention est de proposer une solution à la fois simple et économique, pour permettre la réalisation de plaques, notamment d'immatriculation, pourvues d'une trame ou d'une bordure spécifique, telle que par exemple la raison sociale ou le nom commercial du concessionnaire ayant vendu le véhicule automobile.

A cet effet, elle vise un procédé pour la réalisation d'une plaque signalétique ou d'immatriculation de forme sensiblement rectangulaire, comportant les caractéristiques de la revendication 1.

Selon une autre caractéristique de l'invention, après fixation de la feuille intermédiaire contre la face interne préencollée de la plaque rigide, on retire le film de protection du film adhésif de ladite feuille intermédiaire, puis on colle sur l'ensemble ainsi réalisé une feuille additionnelle ou supplémentaire, réalisée en n'importe quel matériau, susceptible d'être colorée, adhésive ou non et réfléchissante ou non, et susceptible de présenter des indications sur sa face en regard dudit ensemble.

### BREVE DESCRIPTION DES FIGURES

La manière dont l'invention peut être réalisée et les avantages qui en découlent, ressortiront mieux des exemples de réalisation qui suivent, donnés à titre indicatif et non limitatif à l'appui des figures annexées.
La figure 1 est une représentation schématique en éclatée d'un premier mode de réalisation de l'invention.
Les figures 2, 3 et 4 illustrent les différentes étapes du procédé conforme à ce premier mode de réalisation.
La figure 5 est la plaque d'immatriculation obtenue avec le procédé mis en oeuvre selon ce premier mode de réalisation.
La figure 6 est une vue sen éclaté d'un second mode de réalisation qui ne correspond pas à l'invention.
Les figures 7 et 8 sont des étapes du procédé selon le second mode de réalisation ne correspondant pas à l'invention.
La figure 9 est la plaque obtenue avec ce second mode de réalisation.

### DESCRIPTION DETAILLEE DE L'INVENTION

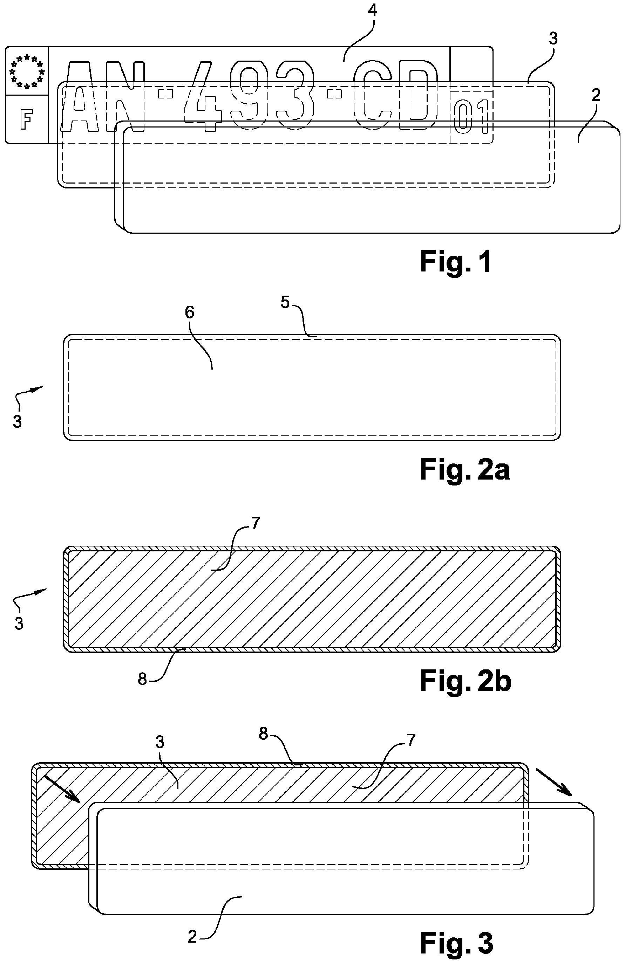

Ainsi donc, la figure 1 illustre mode éclaté différentes composantes d'une plaque en l'espèce d'immatriculation, obtenue avec le procédé de l'invention.

Fondamentalement, celle-ci comporte une plaque rigide (2), de dimension rectangulaire et d'épaisseur typique comprise entre 1 et 5 millimètres.

Typiquement, cette plaque est réalisée en matière plastique, choisie dans le groupe comprenant le PET (polyéthylène téréphtalate), le polypropylène, le PVC, le PVC-GOMME, le polystyrène, le polycarbonate et le PMMA. Cette plaque (2) est transparente.

L'ensemble comporte également une feuille (3) dite intermédiaire, de mêmes dimensions (longueur et largeur) que la plaque rigide (2), mais d'épaisseur nettement plus fine et en outre souple.

Enfin elle comporte une feuille additionnelle (4), là encore, de mêmes dimensions (longueur et largeur) que la plaque rigide (2), et également souple et de faible épaisseur.

Typiquement, la feuille (4) est réalisée en un matériau rétro réfléchissant du type réalisé en matière plastique intégrant des microbilles de verre ou de plastique, afin d'être conforme aux normes en vigueur en terme de plaque d'immatriculation.

La feuille intermédiaire (3) est également réalisée en matière plastique. Elle est constituée d'un complexe tricouche, à savoir :
- une face supérieure, munie d'une prédécoupe (5), définissant une zone centrale (6) et une bordure périphérique (8) ;
- une feuille support intermédiaire (7), transparente ;
- un film adhésif, positionné sur l'autre face de la feuille support intermédiaire, et protégé par un film, par exemple de type silicone.

Lors d'une première étape, on ôte la partie centrale (6) de la face supérieure de telle sorte à ne laisser apparaître que partie centrale de la feuille support intermédiaire (7), en l'espèce transparente, outre la bordure périphérique (8).

Cette feuille intermédiaire (3) est ensuite collée contre la face interne préencollée de la plaque rigide (2), telle qu'illustrée par les flèches sur la figure 3. Ce collage intervient par exemple par laminage au moyen d'un gabarit de dimension standard, adapté aux dimensions de la plaque (2), outre des feuilles (3) et (4).

Corollairement, la feuille additionnelle (4), également réalisée en matière plastique en l'espèce rétro-réfléchissante, est imprimée thermiquement, typiquement du numéro d'immatriculation souhaité.

Après impression, elle est collée contre la face interne de l'ensemble constitué de la plaque rigide (2) et de la feuille intermédiaire (3), après avoir ôté le film de protection silicone du complexe tricouche, là encore par laminage au moyen du gabarit précité.

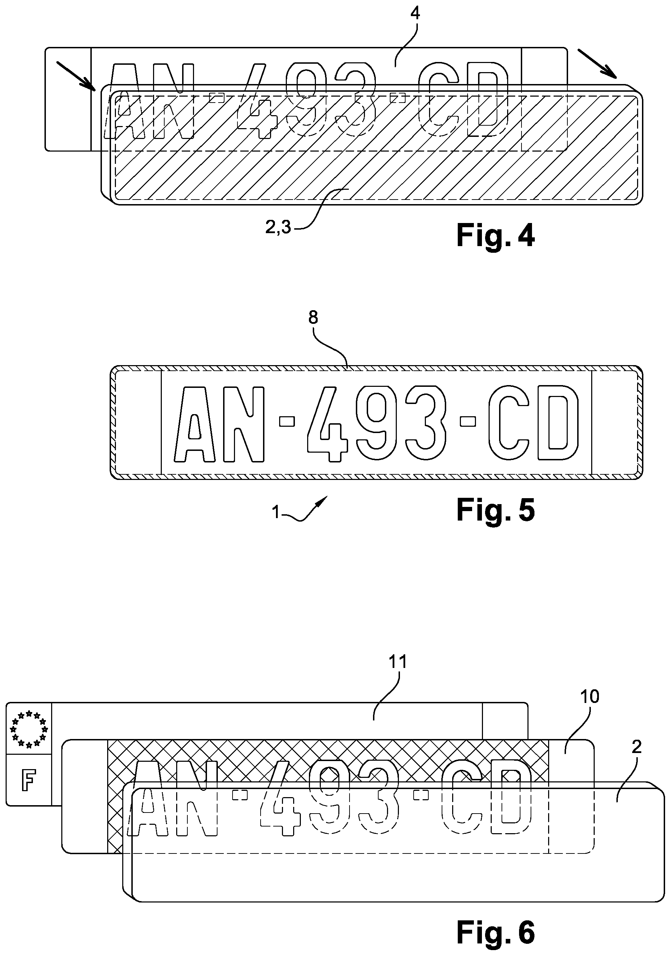

On obtient alors la plaque de la figure 5, qui permet de visualiser, outre bien évidemment le numéro d'immatriculation, la bordure périphérique (8) de la feuille intermédiaire (3). Parallèlement, il peut être envisagé que figure, sur la face supérieure de la feuille intermédiaire (3), à l'aplomb de la bordure périphérique, la raison sociale du concessionnaire, de sorte que le propriétaire du véhicule concerné peut choisir ou non de laisser figurer cette mention.

Ce procédé permet donc de manière simple, de réaliser des plaques en l'espèce d'immatriculation, mais toutes autres plaques signalétique ou d'immatriculation, munies d'une telle bordure périphérique, dont la couleur est à l'appréciation de l'utilisateur, en fonction de la couleur de la feuille intermédiaire (3).

Selon un second mode de réalisation ne correspondant pas à l'invention, il peut être souhaité d'intégrer des motifs, en l'espèce une trame au sein de la plaque. C'est l'objet du mode de réalisation décrit en relation avec les figures 6 à 9.

Ainsi donc, la feuille intermédiaire (3) est remplacée par une feuille intermédiaire (10), là encore de dimensions identiques (longueur et largeur), que celles de la plaque rigide (2).

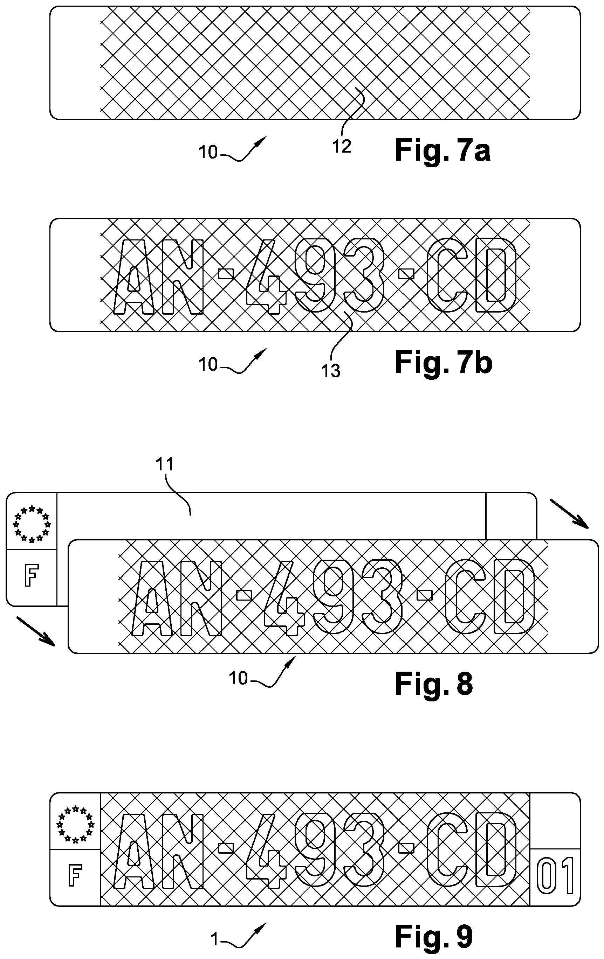

Cette feuille (10) est tramée (12), puis subit une impression au moyen d'une imprimante thermique afin, dans l'exemple décrit, d'y imprimer le numéro d'immatriculation souhaité (figure 7b).

La feuille (10) ainsi imprimée est collée contre la face interne préencollée de la plaque rigide (2) à l'instar de ce qui est décrit en relation avec la figure 4, là encore par laminage au moyen du gabarit précité.

Cette feuille (10) est un complexe bicouche, comportant une face supérieure tramée, destinée à être imprimée, et un film adhésif obtenu par transfert ou par enduction, protégé par un film siliconé.

Puis, une feuille additionnelle (11), en l'espèce constituée d'un matériau rétro-réfléchissant, du type commercialisé par les sociétés 3M, NCI, ORAFOL ou DAOMING est à son tour encollée contre l'ensemble constitué de la plaque rigide (2) et de la feuille (10), en ayant pris soin auparavant d'enlever le film siliconé protégeant le film adhésif dont est munie la feuille (10).

La feuille (10) est très mince ou transparente, afin de permettre la rétro-réflexion.

On obtient alors la plaque telle qu'illustrée en figure 9, permettant dans l'espèce de disposer de disposer d'une plaque tramée, comme préconisé par certains constructeurs automobile, ce de manière tout à fait simple sans nécessiter de stock important.

## Revendications

1. Procédé pour la réalisation d'une plaque signalétique ou d'immatriculation de forme sensiblement rectangulaire, comprenant les étapes suivantes :
- coller une feuille dite intermédiaire (3, 10), dont les dimensions correspondent sensiblement à celles de la plaque signalétique, ou d'immatriculation à réaliser, contre la face interne préencollée d'une plaque rigide transparente (2), dont là encore les dimensions correspondent aux dimensions de la plaque signalétique ou d'immatriculation à réaliser ;
- coller contre la face interne de cette feuille intermédiaire (3, 10), une autre feuille dite additionnelle (4, 11), également de dimensions sensiblement égales à celles de la plaque signalétique ou d'immatriculation à réaliser, ladite feuille additionnelle (4, 11) étant susceptible de porter des indications visibles sur la plaque ainsi obtenue, par transparence à travers ladite feuille intermédiaire
***caractérisé* en ce que**. la feuille intermédiaire (3) est un complexe tri-couche, constituée d'une face supérieure, d'une feuille support intermédiaire transparente et d'un film adhésif, ce dernier étant temporairement protégé par un film de protection, ladite face supérieure étant munie d'une prédécoupe (5), s'étendant sur partie de sa surface, et notamment susceptible de s'étendre selon toute sa bordure périphérique, le procédé consistant en outre à ôter la partie centrale (6) de la face supérieure, définie par la prédécoupe (5), de telle sorte à ne laisser demeurer que la feuille support intermédiaire au niveau de la zone ainsi dégarnie outre le reste de sa surface ou de la bordure périphérique, préalablement à sa fixation contre la face interne préencollée de la plaque rigide transparente.

2. Procédé pour la réalisation d'une plaque signalétique ou d'immatriculation selon la revendication 1, ***caractérisé* en ce qu'**après fixation de la feuille intermédiaire (3) contre la face interne préencollée de la plaque rigide (2), on retire le film de protection du film adhésif de ladite feuille intermédiaire, puis on colle sur l'ensemble ainsi réalisé la feuille additionnelle ou supplémentaire (4), réalisée en n'importe quel matériau, adhésive ou non et réfléchissante ou non, et susceptible de présenter des indications sur sa face en regard dudit ensemble.

## Patentansprüche

1. Verfahren zum Herstellen eines Namensschildes oder eines Kennzeichenschildes mit im Wesentlichen rechteckiger Form, das die folgenden Schritte umfasst:
- ein sogenanntes Zwischenblatt (3, 10), dessen Abmessungen im Wesentlichen denjenigen des herzustellenden Namensschilds oder Kennzeichens entsprechen, gegen die vorgeleimte Innenseite einer transparenten starren Platte (2) zu kleben, deren Abmessungen wiederum den Abmessungen des herzustellenden Namensschilds oder Kennzeichens entsprechen;
- gegen die Innenseite dieses Zwischenblatts (3, 10), ein weiteres zusätzliches Blatt (4, 11), das ebenfalls im Wesentlichen den Abmessungen des herzustellenden Namensschilds oder Kennzeichens entspricht, zu kleben, wobei die auf diesem Zusatzblatt (4, 11) enthaltenen Angaben auf der so erhaltenen Platte sichtbar sind, da sie durch das Zwischenblatt hindurchscheinen
***dadurch gekennzeichnet, dass*** es sich beim Zwischenblatt (3) um einen dreischichtigen Komplex handelt, bestehend aus einer Oberseite, einer transparenten Zwischenlage und einem Klebefilm, letzterer wird vorübergehend durch einen Schutzfilm geschützt und die genannte Oberseite verfügt über eine Vorstanzung (5), die sich über einen Teil der Fläche erstreckt und sich insbesondere entlang ihrer gesamten Peripherie erstrecken sollte, das Verfahren besteht außerdem darin, den Mittelteil (6) der Oberseite abzuziehen, der durch die Vorstanzung (5) definiert ist, so dass nur noch die Zwischenlage in Höhe des so freigelegten Bereichs zurückbleibt, außer der restlichen Fläche oder der Peripherie, vor der Befestigung auf der vorgeleimten Innenfläche der transparenten starren Platte.

2. Verfahren zur Herstellung eines Typenschildes oder Kennzeichens gemäß Anspruch 1, ***dadurch gekennzeichnet, dass*** nach der Befestigung der Zwischenlage (3) gegen die vorgeleimte Innenseite der starren Platte (2) die Schutzfolie der Klebefolie dieser Zwischenlage entfernt wird und dann auf die so hergestellte Einheit das zusätzliche oder weitere Blatt (4) aus einem beliebigen Material, adhäsiv oder nicht, reflektierend oder nicht, geklebt wird, das Angaben auf der Seite enthalten kann, die zu diesem Komplex hinzeigt.

## Claims

1. Method for the forming of a nameplate or registration plate of essentially-rectangular shape, including the following steps:
- bonding of a so-called intermediary sheet (3, 10) of dimensions essentially the same as the nameplate or registration plate to be formed, against the pre-glued interior face of a rigid transparent plate (2), of which the dimensions also correspond to the dimensions of the nameplate or registration plate to be formed;
- bonding of another so-called additional sheet (4, 11) against the interior face of this intermediary sheet (3, 10), being of dimensions essentially equal to those of the nameplate or registration plate to be formed, with the said additional sheet (4, 11) being able to bear markings that are visible on the plate thus obtained, via transparency through the said intermediary plate;
**characterized by** the fact that the intermediary sheet (3) is a three-layer complex composed of an upper face, a transparent intermediary support sheet and an adhesive film, with the latter being temporarily protected by a protective film, with the said upper face being endowed with a pre-cut (5) extending over part of its surface, and being notably able to extend over its entire peripheral edging, with the process also including the removal of the central part (6) of the upper face, such as defined by the pre-cut (5), so as to leave only the intermediary support sheet at the area thus de-garnished, other than on the remainder of its surface or peripheral edging, prior to its securing against the pre-glued interior face of the transparent rigid plate.

2. Method for the forming of a nameplate or registration plate in accordance with claim 1, **characterized by** the fact that, after fixation of the intermediary sheet (3) against the pre-glued interior face of the rigid plate (2), one removes the adhesive protective film from the said intermediary sheet, and then one bonds, onto the assembly thus formed, the additional or supplementary sheet (4), which can be made of any material, whether adhesive or otherwise, and whether reflective or not, and being able to show information on its face opposite the said assembly.
